# EUROPÄISCHE PATENTANMELDUNG

(11) **EP 2 709 231 A1**
(43) Veröffentlichungstag der Anmeldung: **19.03.2014**
(21) Anmeldenummer: 12184038.3
(22) Anmeldetag: 12.09.2012
(51) Int. Cl.: H02J 5/00, B23Q 1/00, G05B 15/00

(54) **Energieversorgungssystem für ein Feldgerät mit einem Funkmodul**

(71) Anmelder: VEGA Grieshaber KG, 77709 Wolfach (DE)
(72) Erfinder: Allgaier, Volker, 77716 Haslach i. K. (DE)
(74) Vertreter: Patentanwälte Westphal, Mussgnug & Partner

(57) **Zusammenfassung**

Die Erfindung betrifft ein Energieversorgungssystem für ein mit einem drahtgebundenen Netzwerk verbundenen Feldgerät (1) mit einem zur Datenkommunikation mit einer externen Einheit ausgebildeten Funkmodul (2), bei dem das Funkmodul (2) mit dem Feldgerät (1) verbunden ist und eine Stromversorgungseinheit (3) aufweist, erfindungsgemäß ist vorgesehen, dass ein Stromversorgungsadapter (10) vorgesehen ist, welcher zur drahtlosen Energieübertragung auf die Stromversorgungseinheit (3) einen Energiesender (11) aufweist, und die Stromversorgungseinheit (3) mit einem Energieempfänger (4) ausgebildet ist, wobei zur Energieübertragung der Energieempfänger (4) und der Energiesender (11) induktiv gekoppelt sind.

## Beschreibung

Die Erfindung betrifft ein Energieversorgungssystem für ein mit einem drahtgebundenen Netzwerk verbundenen Feldgerät mit einem Funkmodul gemäß Oberbegriff des Patentanspruchs 1.

In der industriellen Automatisierungstechnik werden Feldgeräte eingesetzt, die zur Erfassung und/oder Einstellung von Prozessvariablen dienen. Solche Feldgeräte sind in der Regel über Feldbussysteme (wie bspw. HART, PROFIBUS Fieldbus Foundation) verbunden. Die Prozessverdrahtung solcher Feldgeräte erfolgt dabei mindestens über eine Zweidraht-Leitung, über die neben der Datenkommunikation auch die Energieversorgung des Feldgerätes erfolgt. Die drahtgebundene Datenkommunikation kann auch als drahtlose ("wireless") Datenkommunikation realisiert werden, wobei neuere Feldgeräte mit integrierten Funkmodulen einschließlich einer Stromquelle hergestellt werden und damit als autarke Einheit betreibbar sind.

Um Feldgeräte ohne ein Funkmodul, die also lediglich eine Kommunikations- und Stromversorgungsschnittstelle aufweisen, mit einem Funkmodul (Wireless Modul) betreiben zu können, besteht das Problem, dass ein solches Funkmodul durch das Feldgerät nicht mit Energie versorgt werden kann. Daher muss ein solches Funkmodul entweder eine eigene Stromversorgung aufweisen oder die Stromversorgung muss drahtgebunden erfolgen.

So ist bspw. aus der DE 10 2009 047 538 A1 ein Feldgerät bekannt, welches durch die Aufrüstung mit einem Funkmodul als Funk-Feldgerät betrieben werden kann. Hierzu ist das Funkmodul über die Kommunikationsschnittstelle des Feldgerätes mit demselben verbunden und weist eine eigene Stromversorgungsquelle auf, mit welcher auch das Feldgerät mit Energie versorgt wird. Damit kann ein mit mehreren Feldgeräten aufgebautes drahtgebundenes Netzwerk auf ein Funknetzwerk umgerüstet werden, wobei im Rahmen einer solchen Umrüstung auf ein Funknetzwerk das bestehende drahtgebundene Netzwerk hinfällig werden kann.

Falls jedoch nicht alle Feldgeräte eines drahtgebundenen Netzwerkes umrüstbar sind oder umgerüstet werden sollen, ist die aus der DE 10 2009 047 538 A1 bekannte Vorgehensweise nicht anwendbar.

Weiterhin beschreibt die DE 10 2007 015 203 A1 ein drahtloses Automatisierungssystem, bei welchem eine Basisstation drahtlos mit mehreren Slave-Modulen kommuniziert, wobei ein Slave-Modul als Sensor/Aktorverteiler mit mehreren Feldgeräten drahtlos oder drahtgebunden verbunden ist. Dieser Sensor/Aktorverteiler weist eine drahtlose Energieversorgung auf, die über eine induktive Kopplung erfolgt.

Schließlich schlägt die DE 20 2004 021 004 U1 vor, zur Energieversorgung eines Feldgerätes über ein mehradriges Kabel elektrische Energie induktiv auszukoppeln.

Es ist Aufgabe der vorliegenden Erfindung, ein Energieversorgungssystem für ein mit einem drahtgebundenen Netzwerk verbundenen Feldgerät mit einem Funkmodul der eingangs genannten Art anzugeben, welches ohne das Funkmodul mit Strom versorgen zu können trotzdem drahtlos zumindest in Betrieb genommen werden kann.

Diese Aufgabe wird gelöst durch ein Energieversorgungssystem mit den Merkmalen des Patentanspruchs 1.

Ein solches Energieversorgungssystem für ein mit einem drahtgebundenen Netzwerk verbundenen Feldgerät mit einem zur Datenkommunikation mit einer externen Einheit ausgebildeten Funkmodul, bei dem das Funkmodul mit dem Feldgerät verbunden ist und eine Stromversorgungseinheit aufweist, zeichnet sich erfindungsgemäß dadurch aus, dass ein Stromversorgungsadapter vorgesehen ist, welcher zur drahtlosen Energieübertragung auf die Stromversorgungseinheit einen Energiesender aufweist, und die Stromversorgungseinheit mit einem Energieempfänger ausgebildet ist, wobei zur Energieübertragung der Energieempfänger und der Energiesender induktiv gekoppelt sind.

Mit einem solchen Energieversorgungssystem ist es möglich, Feldgeräte, welche keine Energieversorgung für Funkmodule zur Verfügung stellen können, trotzdem mit einer drahtlosen Kommunikationstechnik betrieben, zumindest aber drahtlos in Betrieb genommen werden können. Dies ist besonders dann vorteilhaft, wenn Feldgeräte in einer explosionsgefährdeten Umgebung in Betrieb genommen werden, da sie hierzu nicht geöffnet werden müssen.

Als Energiesender und Energieempfänger bietet es sich an, die von der Firma IDT (Integrated Device Technology) als Single Chip Controller entwickelten Wireless Power-Transmitter/ Receiver IDTP9030/9020 einzusetzen. Mit diesen beiden Bausteinen IDTP9030 und IDTP9020 kann eine drahtlose Leistungsübertragung entsprechend dem Qi-Standard des Wireless Power Konsortiums realisiert werden. Sowohl der Transmitter- als auch Receiver-Chip erlaubt die "Multi-Mode"-Betriebsart und unterstützen damit über den Qi-Standard hinaus proprietäre Formate für erweiterte Features, verbesserte Sicherheit und höhere Übertragungsleistung.

Der Energieempfänger-Chip IDTP9030 bietet eine Multi-Layer Foreign Object Detection (FOD) um sicherzustellen, dass keine aufgelegten oder umgebenden Metallteile Energie aufnehmen. Hierzu wird mit ausgeklügelten Multi-Parameter-Algorithmen gearbeitet, um ein hohes Maß an Sicherheit zu gewährleisten und FOD-Fehlalarme weitestgehend auszuschließen.

Ferner weisen diese beiden Transmitter/ Receiver-Chips IDTP9030/9020 Schutzeinrichtungen gegen Übertemperatur, Überspannung und Überstrom auf.

Bei einer vorteilhaften Ausgestaltung der Erfindung ist der Stromversorgungsadapter mit einer Energiespeichereinheit, bspw. einer Batterie oder einem Akkumulator zur Stromversorgung für den Energiesender ausgebildet. Vorzugsweise weist bei Einsatz eines Akkumulators als Energiespeichereinheit weiterbildungsgemäß der Stromversorgungsadapter einen Energieempfänger zur drahtlosen Energieübertragung von einer externen Ladeeinheit auf, wobei der Energieempfänger ausgebildet ist, die von der externen Ladeeinheit empfangene Energie zur Speicherung der Energiespeichereinheit, also bspw. dem Akkumulator zuzuführen.

Gemäß einer anderen vorteilhaften Ausgestaltung der Erfindung ein solcher mit dem Funkmodul ausgerüsteter Stromversorgungsadapter als externe Einheit zur Durchführung der Datenkommunikation mit dem Funkmodul des Feldgerätes ausgebildet ist.

Mit einem solchen Stromversorgungsadapter als externe Einheit können in einfacher Weise Feldgeräte mit Funkmodulen, die von dem Stromversorgungsadapter extern mit Energie versorgt werden, in Betrieb genommen werden oder auch eine externe Kommunikation durchgeführt werden. Vorzugsweise ist der Stromversorgungsadapter mit einer Energiespeichereinheit als Stromversorgung für den Energiesender und das Funkmodul ausgebildet.

Besonders vorteilhaft ist es gemäß einer Weiterbildung der Erfindung, wenn der Stromversorgungsadapter eine Kommunikationsschnittstelle aufweist und eine Steuer- und Überwachungseinheit vorgesehen ist, die zur Datenkommunikation über die Kommunikationsschnittstelle mit dem Funkmodul des Stromversorgungsadapters ausgebildet ist. Mit einer solchen Steuer- und Überwachungseinheit als übergeordnete Einheit in einem Netzwerk von Feldgeräten kann in einfacher Weise Feldgeräte in Betrieb genommen, Prozesse überwacht und gesteuert werden.

Vorzugsweise kann diese Kommunikationsschnittestelle zur Steuerfindungsgemäßen- und Überwachungseinheit zur drahtlosen oder zur drahtgebundenen Datenübertragung ausgebildet sein.

Schließlich kann gemäß einer letzten vorteilhaften Ausgestaltung der Erfindung der Stromversorgungsadapter mit einem Mikroprozessor zur Steuerung der Datenkommunikation des Funkmoduls mit der externen Steuer- und Überwachungseinheit ausgebildet sein.

Die Erfindung wird nachstehend anhand von Ausführungsbeispielen unter Bezugnahme auf die beigefügten Figuren ausführlich beschrieben. Es zeigen:
- Figur 1: ein Blockschaltbild eines Energieversorgungssystems als Ausführungsbeispiel der Erfindung,
- Figur 2: ein Blockschaltbild eines Energieversorgungssystems als weiteres Ausführungsbeispiel der Erfindung,
- Figur 3: ein Blockschaltbild eines Energieversorgungssystems als weiteres Ausführungsbeispiel der Erfindung,
- Figur 4: eine schematische Darstellung eines Energieversorgungssystems gemäß einer Figuren 1 bis 3 mit einem PC als externe Überwachungs- und Steuereinheit,
- Figur 5: ein Blockschaltbild eines Energieversorgungssystems als weiteres Ausführungsbeispiel der Erfindung, und
- Figur 6: ein Blockschaltbild eines Energieversorgungssystems als letztes Ausführungsbeispiel der Erfindung.

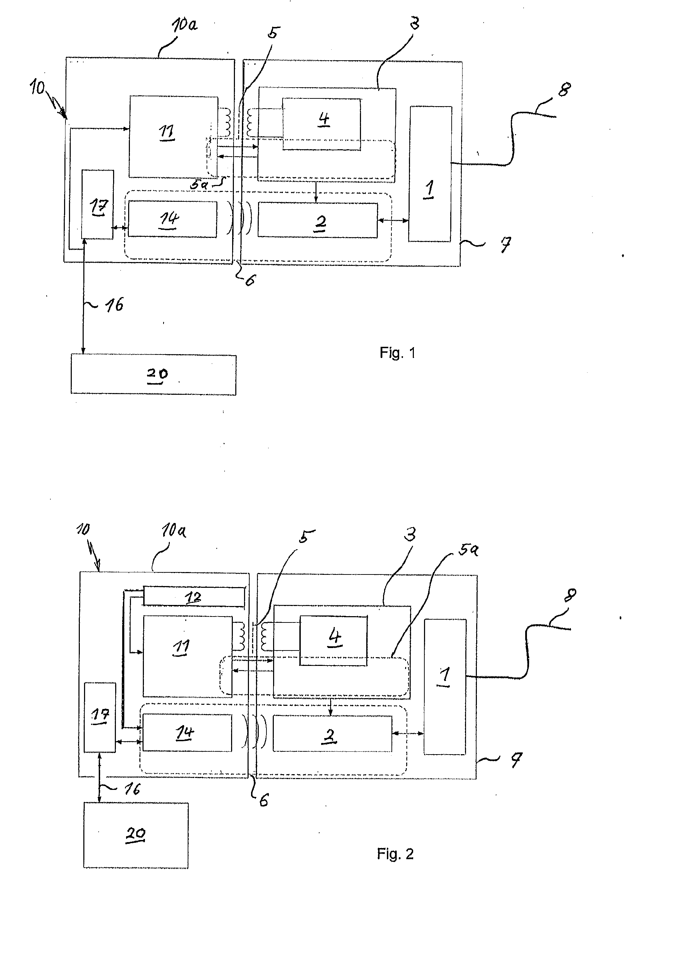

In einem explosionsgeschützten Gehäuse 7 gemäß den Ausführungsbeispielen der Figuren 1 bis 6 sind ein Feldgerät 1, ein Funkmodul 2 sowie zu dessen Stromversorgung eine Stromversorgungseinheit 3 untergebracht. Ferner ist zumindest eine zweiadrige Prozessverdrahtung 8 durch das Gehäuse 7 in das Feldgerät 1 geführt, wobei über diese Prozessverdrahtung 8 das Feldgerät 1 an ein drahtgebundenes Netzwerk von weiteren Feldgeräten (nicht dargestellt) angebunden ist. Über diese Prozessverdrahtung 8 erfolgt sowohl eine Datenkommunikation mit dem Feldgerät 1 als auch dessen Stromversorgung. Eine Stromversorgung des Funkmoduls 2 durch das Feldgerät 1 ist nicht möglich, daher ist diese Stromversorgungseinheit 3 erforderlich.

Diese Stromversorgungseinheit 3 ist mit einem Energieempfänger 4 ausgestattet, der über eine induktive Kopplung 5 mit einem Energiesender 11 eines Stromversorgungsadapters 10 Energie aufnimmt und dem Funkmodul 2 zur Verfügung stellt, das als elektrische Last an die Stromversorgungseinheit 3 angeschlossen ist.

Wie eingangs erwähnt lassen sich als Energiesender 11 des Stromversorgungsadapters 10 und als Energieempfänger 4 der Stromversorgungseinheit 3 die von der Firma IDT hergestellten und angebotenen Wireless Power-Transmitter IDTP9030 und Wireless Power-Receiver IDTP9020 einsetzen, die als Single Chip Controller ausgeführt sind. Natürlich lassen sich auch andere für den Zweck der drahtlosen Energieübertragung geeignete Bauelemente einsetzen. Der Transmitter IDTP9030 als Energiesender 11 und der Receiver IDTP9020 als Energieempfänger 4 sind derart ausgebildet, dass mit der induktiven Kopplung 5 gleichzeitig auch eine Kommunikationsverbindung 5a realisiert wird, mit der eine Authentifizierung, eine thermische Kontrolle und eine Ladezustandsübertragung durchgeführt werden kann.

In den Ausführungsbeispielen gemäß den Figuren 1 bis 4 weist der Stromversorgungsadapter 10 ein Funkmodul 14 auf, welches dazu dient, eine Kommunikationsverbindung 6 mit dem mit dem Feldgerät 1 verbundenen Funkmodul 2 aufzubauen, über die eine Datenkommunikation durchgeführt werden kann.

Die Stromversorgungsadapter 10 nach den Figuren 1 und 2 sind zusätzlich mit einem Mikrocontroller 17 ausgestattet, der mit dem Funkmodul 14 des Stromversorgungsadapters 10 zur drahtgebundenen Kommunikation verbunden ist und eine Kommunikationsverbindung zu einer externen Steuer- und Überwachungseinheit 20 herstellt. Die Verbindung dieses Mikrocontrollers 17 mit dieser Steuer- und Überwachungseinheit 20 erfolgt über eine Schnittstelle 16, die bspw. als USB-Schnittstelle ausgeführt sein kann.

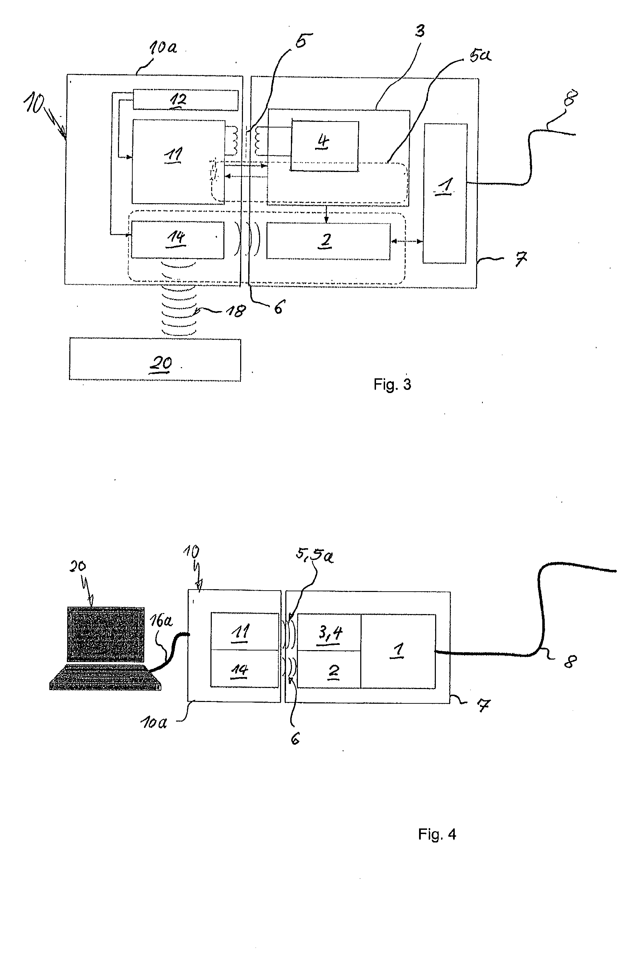

Gemäß Figur 1 wird die Stromversorgung des Energieempfängers 11 auch über die USB-Schnittstelle 16 realisiert, das Funkmodul 14 wird von dem Mikrocontroller 17 mit Energie versorgt. Eine entsprechende schematische Darstellung zeigt Figur 4, wonach ein Laptop 20 als Steuer- und Überwachungseinheit über ein USB-Kabel 16a mit einem Stromversorgungsadapter 10 verbunden ist, der einen Energiesender 11 und ein Funkmodul 14 in einem Gehäuse 10a aufnimmt. Dieser Stromversorgungsadapter 10 überträgt einerseits mittels des Energiesenders 11 über eine induktive Kopplung 5 Energie auf den Energieempfänger 4 der Stromversorgungseinheit 3 und führt eine Datenkommunikation mit dem Funkmodul 2 des Feldgerätes 1 über eine drahtlose Datenverbindung 6 durch. Das Feldgerät 1, die Stromversorgungseinheit 3 und das Funkmodul 2 werden von einem Gehäuse 7 aufgenommen.

Bei dem Stromversorgungsadapter 10 nach Figur 2 wird die Stromversorgung des Energieempfängers 11 und des Funkmoduls 14 von einem Akkumulator 12 als Energiespeichereinheit übernommen. Auch der Stromversorgungsadapter 10 nach Figur 1 kann optional mit einem solchen Akkumulator 12 ausgerüstet werden.

Die Komponenten des Stromversorgungsadapters 10 gemäß den Figuren 1 und 2, also der Energiesender 11, das Funkmodul 14 und der Mikroprozessor 17 sowie ggf. der Akkumulator 12 sind in einem Gehäuse 10a angeordnet.

In dem Ausführungsbeispiel gemäß Figur 3 werden der Energiesender 11 und das Funkmodul 14 von einem Akkumulator 12 mit Energie versorgt, wobei diese Komponenten von einem Gehäuse 10a aufgenommen werden.

Eine externe Steuer- und Überwachungseinheit 20, bspw. ein PC kommuniziert über eine drahtlose Kommunikationsverbindung 18 mit dem Funkmodul 14 des Stromversorgungsadapters 10.

Die in einem Energieversorgungssystem gemäß den Ausführungsbeispielen nach den Figuren 1 bis 4 verwendeten drahtlosen Kommunikationstechnologien sind einheitlich ausgeführt, also bspw. entweder nach dem Bluetooth-, ZigBee- oder dem ISM-Standard oder einem diesen ähnlichen Standard.

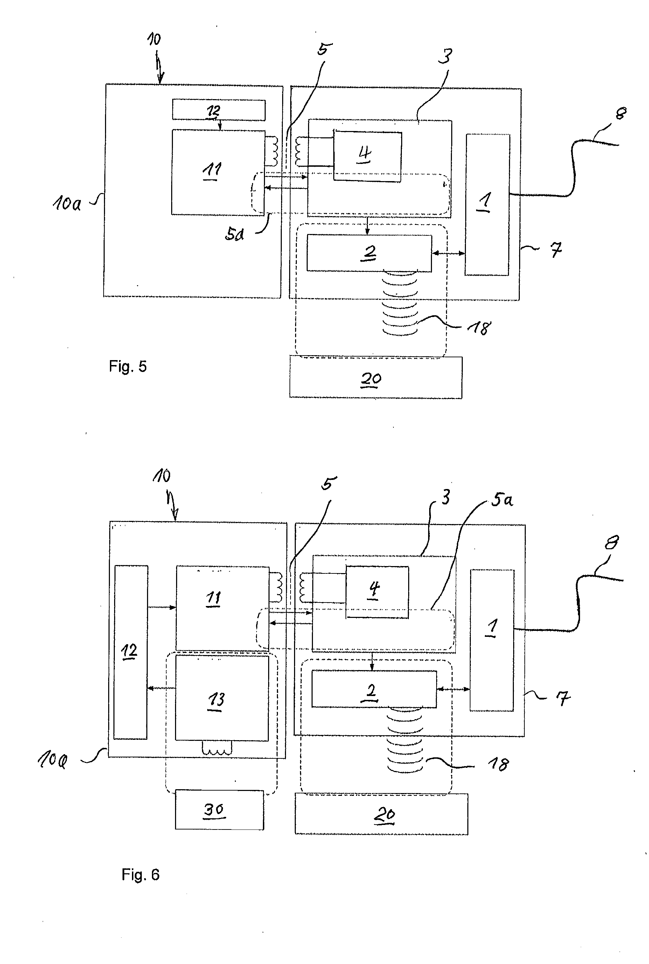

Der Stromversorgungsadapter 10 gemäß Figur 5 enthält in einem Gehäuse 10a lediglich den Energiesender 11 sowie einen Akkumulator 12 zur Energieversorgung desselben.

Eine externe Steuer- und Überwachungseinheit 20 ist über eine drahtlose Kommunikationsverbindung 18 direkt mit dem Funkmodul 2 verbunden, welches mit dem Feldgerät 1 kommunikationsverbunden ist. Als Technologie zur Datenübertragung hinsichtlich der Kommunikationsverbindung 18 wird auch hier entweder der Bluetooth-, ZigBee-, ISM-Standard o. ä. Standard eingesetzt.

Das Ausführungsbeispiel nach Figur 6 unterscheidet sich von demjenigen nach Figur 5 dadurch, dass der Stromversorgungsadapter 10 in einem Gehäuse 10a neben einem Energiesender 11 und einem Akkumulator 12 zur Energieversorgung des Energiesenders 11 zusätzlich einen Energieempfänger 13 aufweist, der zur Energieübertragung induktiv mit einer externen Ladeeinheit 30 gekoppelt ist. Der Energieempfänger 13 ist mit dem Akkumulator 12 verbunden, so dass die von der Ladeeinheit 30 übertragene Energie in diesem Akkumulator 12 gespeichert wird, also der Akkumulator 12 mit dieser übertragenen Energie von dem Energieempfänger 13 geladen wird.

### Bezugszeichenliste

- 1: Feldgerät
- 2: Funkmodul des Feldgerätes 1
- 3: Stromversorgungseinheit
- 4: Energieempfänger der Stromversorgungseinheit 3
- 5: induktive Kopplung
- 5a: Kommunikationsverbindung
- 6: Kommunikationsverbindung
- 7: Gehäuse
- 8: Prozessverdrahtung

- 10: Stromversorgungsadapter
- 10a: Gehäuse des Stromversorgungsadapters 10
- 11: Energiesender des Stromversorgungsadapters 10
- 12: Energiespeichereinheit, Batterie, Akkumulator
- 13: Energieempfänger des Stromversorgungsadapters 10
- 14: Funkmodul des Stromversorgungsadapters 10
- 15: Energieempfänger des Stromversorgungsadapters 10
- 16: Kommunikationsschnittstelle
- 16a: USB-Kabel
- 17: Mikroprozessor des Stromversorgungsadapters 10
- 18: drahtlose Kommunikationsverbindung

- 20: Steuer- und Überwachungseinheit

- 30: externe Ladeeinheit

## Patentansprüche

1. Energieversorgungssystem für ein mit einem drahtgebundenen Netzwerk verbundenen Feldgerät (1) mit einem zur Datenkommunikation mit einer externen Einheit ausgebildeten Funkmodul (2), bei dem das Funkmodul (2) mit dem Feldgerät (1) verbunden ist und eine Stromversorgungseinheit (3) aufweist,
**dadurch gekennzeichnet, dass**
- ein Stromversorgungsadapter (10) vorgesehen ist, welcher zur drahtlosen Energieübertragung auf die Stromversorgungseinheit (3) einen Energiesender (11) aufweist,
und
- die Stromversorgungseinheit (3) mit einem Energieempfänger (4) ausgebildet ist, wobei zur Energieübertragung der Energieempfänger (4) und der Energiesender (11) induktiv gekoppelt sind.

2. Energieversorgungssystem nach Anspruch 1,
**dadurch gekennzeichnet, dass** der Stromversorgungsadapter (10) mit einer Energiespeichereinheit (12) zur Stromversorgung für den Energiesender (11) ausgebildet ist.

3. Energieversorgungssystem nach Anspruch 2,
**dadurch gekennzeichnet, dass**
- der Stromversorgungsadapter (10) einen Energieempfänger (13) zur drahtlosen Energieübertragung von einer externen Ladeeinheit (30) aufweist, und
der Energieempfänger (13) ausgebildet ist, die von der externen Ladeeinheit (30) empfangene Energie zur Speicherung der Energiespeichereinheit (12) zuzuführen.

4. Energieversorgungssystem nach Anspruch 1,
**dadurch gekennzeichnet, dass**
- der Stromversorgungsadapter (10) ein Funkmodul (14) aufweist, und
- der Stromversorgungsadapter (10) mit dem Funkmodul (14) als externe Einheit zur Durchführung der Datenkommunikation mit dem Funkmodul (2) des Feldgerätes (1) ausgebildet ist.

5. Energieversorgungssystem nach Anspruch 4,
**dadurch gekennzeichnet, dass** der Stromversorgungsadapter (10) mit einer Energiespeichereinheit (12) zur Stromversorgung für den Energiesender (11) und das Funkmodul (14) ausgebildet ist.

6. Energieversorgungssystem nach Anspruch 4 oder 5,
**dadurch gekennzeichnet, dass**
- der Stromversorgungsadapter (10) eine Kommunikationsschnittstelle (16) aufweist, und
- eine Steuer- und Überwachungseinheit (20) vorgesehen ist, die zur Datenkommunikation über die Kommunikationsschnittstelle (16) mit dem Funkmodul (14) des Stromversorgungsadapters (10) ausgebildet ist.

7. Energieversorgungssystem nach Anspruch 6,
**dadurch gekennzeichnet, dass** die Kommunikationsschnittestelle (16) zur drahtlosen Datenübertragung ausgebildet ist.

8. Energieversorgungssystem nach Anspruch 6,
**dadurch gekennzeichnet, dass** die Kommunikationsschnittestelle (16) zur drahtgebundenen Datenübertragung ausgebildet ist.

9. Energieversorgungssystem nach Anspruch 8,
**dadurch gekennzeichnet, dass** die Kommunikationsschnittstelle (16) zur drahtgebundenen Energieübertragung ausgebildet ist.

10. Energieversorgungssystem nach einem der Ansprüche 4 bis 9,
**dadurch gekennzeichnet, dass** der Stromversorgungsadapter (10) mit einem Mikroprozessor (17) zur Steuerung der Datenkommunikation des Funkmoduls (2) mit der externen Steuer- und Überwachungseinheit (20) ausgebildet ist.
